(19) Europäisches Patentamt
European Patent Office
Office européen des brevets

(11) **EP 2 306 611 A2**

# EUROPEAN PATENT APPLICATION
published in accordance with Art. 153(4) EPC

(43) Date of publication:
**06.04.2011 Bulletin 2011/14**

(51) Int Cl.:
***H02J 5/00*** *(2006.01)*   ***H02J 7/02*** *(2006.01)*

(21) Application number: **09754008.2**

(22) Date of filing: **28.05.2009**

(86) International application number:
**PCT/ES2009/070189**

(87) International publication number:
**WO 2009/144354 (03.12.2009 Gazette 2009/49)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **28.05.2008 ES 200801603**

(71) Applicant: **Fundación CIRCE - Centro de Investigación de Recursos y Consumos Energéticos María de Luna, 3 50018 Zaragoza (ES)**

(72) Inventors:
• **VILLA GAZULLA, Juan Luis**
  **E-50018 Zaragoza (ES)**
• **LLOMBART ESTOPIÑÁN, Andrés**
  **E-50018 Zaragoza (ES)**
• **SALLÁN ARASANZ, Jesús**
  **E-50018 Zaragoza (ES)**
• **SANZ OSORIO, José Francisco**
  **E-50018 Zaragoza (ES)**
• **GARCÍA GRACIA, Miguel**
  **E-50018 Zaragoza (ES)**

(74) Representative: **Schäfer, Matthias W.**
  **Patentanwalt**
  **Schwanseestrasse 43**
  **81549 München (DE)**

(54) **HIGH-FREQUENCY INDUCTIVE COUPLING POWER TRANSFER SYSTEM AND ASSOCIATED METHOD**

(57)     The invention relates to a high-frequency inductive coupling power transfer system with SP compensation in the primary and which is suitable both for series- and parallel-compensated secondaries, i.e. with a capacitor in series followed by a capacitor in parallel in the primary and a capacitor in series or a capacitor in parallel in the secondary.

FIG.3

## Description

## <u>OBJECT OF THE INVENTION</u>

This invention relates to a high-frequency inductive coupling power transfer system that has SP compensation in the primary and is applicable for compensated secondaries in series and in parallel, i.e., with a capacitor in series followed by one in parallel in the primary and one in series or in parallel in the secondary.

This SP compensation in the primary allows transferring, naturally and without any type of control, power that is equal to or greater than the nominal power for misalignments of up to 50% of the area of the secondary coil with 25% maximum overpower of the nominal value of the load and 75% maximum overcurrent in the supply in the inductive coupling power transfer (hereinafter, "ICPT") system.

The procedure related to the power transfer system is based on selecting primary capacitors for transferring the nominal power having chosen a given misalignment and a given - power supply, which supplies power to the primary that is subsequently transferred to the secondary and then to the load.

## <u>BACKGROUND OF THE INVENTION</u>

ICPT systems are known in the state of the art as systems formed by two electrically-isolated coils or windings that are magnetically coupled through the air that can transfer power very efficiently.

In the air, the coupling between the coils is much less than for transformers or motors in which the coupling is done via a magnetic core. For this reason, to achieve high levels of performance in the transfer, it is necessary to operate at high frequencies and with coils compensated with capacitors in both windings. These coupling capacitors make the system work in resonance, and, therefore, the desired power is transferred with a high level of performance.

ICPT systems have two distinct parts:

- A primary system comprising a coil of $N_1$ turns and $S_1$ section, a compensation system and a high-frequency power supply system that feeds the primary with a modulated voltage using PWM techniques.

- A secondary system or pick-up comprising a receiver coil of $N_2$ turns and $S_2$ section, a compensation system and a converter that adapts the voltage and current transferred to meet the requirements of the electrical load.

The basic compensation systems are made up of a resonance capacitor $C_x$ connected in series and/or in parallel. There are, therefore, four different types of compensation depending on the series or parallel connection of the capacitors to the primary and secondary coils.

One of the applications of ICPT systems is the feeding of power to electric vehicles, moving or stationary, via one or more conductors underneath the vehicles. These systems are known as moving secondary systems and fixed secondary systems respectively.

For these applications, there are two physical systems that differ based on how the flux is captured by the secondary: the normal flux capture systems and the tangential or transverse flux capture systems.

The transverse flux systems are, in their basic form, made up of a single conductor in the primary located below the asphalt that acts as a transmission line and a secondary coil in a transverse position in relation to the primary conductor. As this system has a very low mutual inductance coefficient, the secondary coil must be wound on a ferrite core.

This system tolerates very small misalignments as the power transferred falls sharply when the secondary coil is moved to the left or right. There are solutions comprising multiple conductors that allow an amount of misalignment provided that the secondary coil does not pass the vertical limits marked by the conductors at the ends. These solutions are much more expensive and the coupling coefficient is still low.

The normal flux capture systems have two flat coils facing each other and a mutual inductance coefficient "M" that is much greater than that of the transverse flux capture systems. The primary coil has a width equivalent to that of the secondary although it can be much longer if the aim is to transfer power over a greater area or to set up a charging zone for moving vehicles.

How the misalignment affects the behaviour of these systems is greatly influenced by the type of compensation used. When the compensation in the primary is in parallel, i.e., PS or PP, the behaviour is the same as for transverse flux systems: power transfer capability is lost as the secondary is moved away from its centred position.

When compensation in the primary is in series, i.e., SS or SP, the power transferred increases as the secondary moves away from its centred position, reaching 2.5 times the nominal power for movements of 50% of the secondary coil area, which endangers the integrity of the supply system and the coils; the power sharply decreases for greater misalignments.

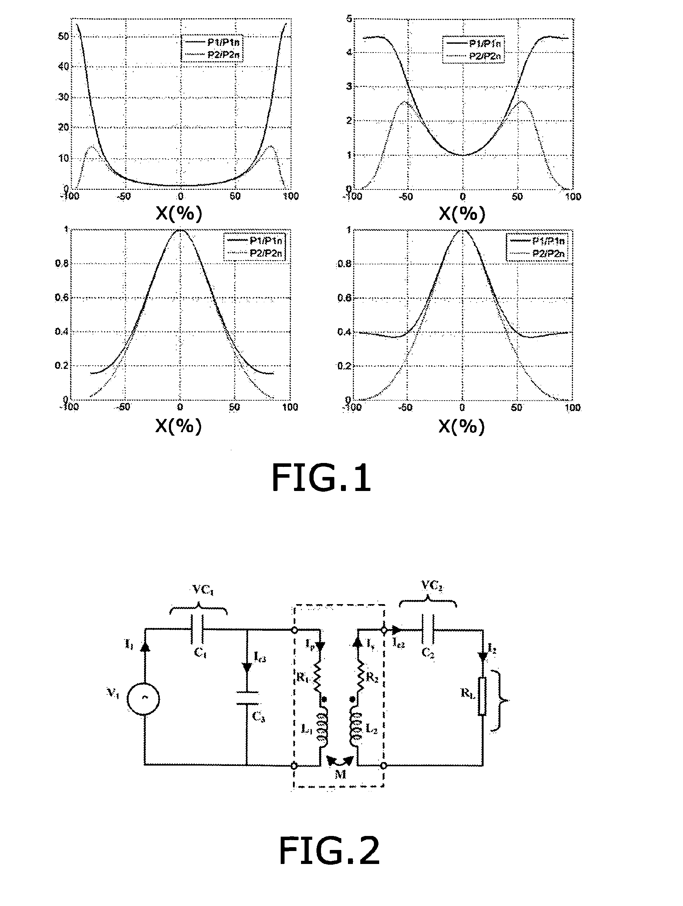

The change in the power absorbed and supplied to the load with respect to the nominal for misalignment X between coils as a % of the width of the secondary for SS, SP, PS and PP configurations is illustrated in Figure 1 from left to right and top to bottom respectively.

In existing battery charging systems, the positioning of the coils is done with the aid of auxiliary electromechanical systems that provide a perfect alignment and always small coupling distances in the vertical direction so the transfer process is optimal. This system of alignment is expensive and slow.

This invention proposes an SP configuration in the primary that-in conjunction with any type of basic compensation in the secondary-supports transferring, naturally and without any type of control, power equal to or greater than the nominal for misalignments of up to 50% of the area of the secondary coil where the maximum power supplied to the load is not greater than 25% of the nominal value of the load and with a maximum overcurrent of 75% in the supply.

## DESCRIPTION OF THE INVENTION

This invention is a high-frequency inductive coupling power transfer system that has SP compensation in the primary, i.e., it has a capacitor in series followed by one in parallel in the primary and a basic configuration in the secondary.

With this compensation system, a power load equal to or greater than the nominal can be transferred naturally and stably without the need for control for a desired misalignment always less than 50% of the secondary coil area where the maximum power supplied to the load is not greater than 25% of the nominal power and where the maximum overcurrent of the supply does not exceed 75%.

In other words, when at least 50% of the area of the secondary coil is facing the primary coil, the power transferred to the load is maintained between the nominal power and nominal power plus 25% via the SP compensation in the primary. The misalignments can be in either of the two axes of the horizontal plane or in a combination of both directions.

With this SP compensation, which has a capacitor $C_1$ in series in the primary, the capacitance of capacitor $C_3$ in parallel in the primary must be below that which would be achieved if the group formed by $C_2$, the capacitance of the secondary capacitor, $C_3$ and the coupled coils were in resonance.

Thus, the nominal power can be transferred for the aforementioned misalignments between the coils of the primary and the secondary by choosing a value for $C_1$ that makes the group formed by $C_1$, $C_3$, $C_2$ and the coupled coils in resonance.

The choice of the capacitors $C_1$ and $C_3$ of the primary determines the power transfer values obtained that are equal to or greater than the nominal for up to a given misalignment.

The lower the capacitance of capacitor $C_3$, the greater the misalignment there can be between the primary and the secondary in transferring the nominal power or greater, although the power supply will have to be oversized more and the overpower sent to the load will be greater.

Therefore, to select capacitors $C_1$ and $C_3$ of the primary, there must be a compromise between the maximum desired misalignment, the maximum power delivered to the supply and the maximum power transferred to the load.

The procedure for the power transfer system consists in choosing the capacitance of capacitors $C_1$ and $C_3$ of the primary for transferring the nominal power having previously selected a given misalignment; capacitances $C_1$ and $C_3$ are selected in the following stage.

In this stage, the first step is to determine capacitances $C_2$ of the secondary capacitor and $C_3$ of the capacitor in parallel of the primary using the PS (parallel-series) or the PP (parallel-parallel) compensation equations, which are referred to as the nominal capacitances and are represented as $C_{2PS}$ and $C_{3PS}$, and $C_{2PP}$ and $C_{3PP}$ respectively. Thus, for the parallel-series scenario:

$$C_{2PS} = \frac{1}{\omega^2 L_2}$$

and

$$C_{3PS} = \frac{L_2 C_{2PS}}{L_1 + \frac{M^4}{L_1 L_2 C_{2PS} R_L^2}}$$

as a function of $C_{2PS}$
where:

$\omega$ is the work frequency
$L_2$ is the inductance of the secondary coil.
$L_1$ is the inductance of the emitting coil.
M is the mutual inductance coefficient between the coils.
$R_L$ is the equivalent load connected to the receiver.

For the parallel-parallel scenario:

$$C_{2PP} = \frac{1}{\omega^2 L_2}$$

and

$$C_{3PP} = \frac{(L_1 L_2 - M^2) C_2 L_2^2}{\frac{M^4 C_2 R_L^2}{L_2} + (L_1 L_2 - M^2)^2}$$

as a function of $C_{2PP}$
where:

$\omega$ is the work frequency
$L_2$ is the inductance of the secondary coil.

$L_1$ is the inductance of the emitting coil.

M is the mutual inductance coefficient between the coils.

$R_L$ is the equivalent load connected to the receiver.

With these capacitances, to go from PS or PP compensation to SPS or SPP compensation respectively, a capacitance $C_3$ less that its nominal value $C_{3PS}$ or $C_{3PP}$ is selected, meaning that the total impedance of the system is inductive and, therefore, capacitor $C_1$ can be added to the primary in series, which fulfils the condition that the total resonance of the circuit seen from the network is be obtained.

Once capacitances $C_1$ and $C_3$ have been determined, a check is done to see if, for a misalignment value between 0 and the maximum desired misalignment, the power delivered to the load is below the nominal values, in which case $C_3$ is reduced and $C_1$ is recalculated until the power supplied to the load is equal to or greater than the nominal for the entire misalignment range in which the configuration is to work.

Once these calculations are done, a check must be made to see if the maximum power supplied to the load and/or the maximum current provided from the supply exceed those permitted for the entire misalignment range in which the configuration is to work. If this were the case, the maximum misalignment permitted in the system must be reduced so that both parameters fall within those allowed by the load and supply respectively.

The maximum current from the supply and/or the maximum power absorbed by the load may reach the maximum for a maximum misalignment value lower than the desired value. This would mean that the nominal power for the maximum misalignment chosen could not be reached; only a lower power would be reached unless the capacitance of the supply and/or the power supported by the load were increased.

In this case, by increasing the supply and/or load capacitance, capacitances $C_1$ and $C_3$ could be recalculated to obtain the new misalignment.

## DESCRIPTION OF THE DIAGRAMS

This specification is accompanied with a set of diagrams that illustrate the preferred embodiment example yet in no way limit the invention.

Figure 1 illustrates the change in the power absorbed and supplied to the load with respect to the nominal for misalignment X between the coils as a % of the width of the secondary for SS, SP, PS and PP configurations, from left to right and top to bottom respectively.

Figure 2 shows an electrical circuit representing the ideal system of high-frequency inductive coupling power transfer using SPS compensation.

Figure 3 shows an electrical circuit representing the real system of high-frequency inductive coupling power transfer using SPS compensation with an H-bridge.

Figure 4 illustrates the change in the power absorbed and delivered to the load with respect to the nominal for misalignment X between the coils as a % of the width of the secondary for the SPS configuration.

Figure 5 illustrates the change in power absorbed from the supply, the power delivered to the load and the current in the primary with respect to the nominal values for misalignment X between the coils as a % of the width of the secondary for different values of the capacitors of the primary with SPS compensation.

Figure 6 shows a table that lists the performance values, the maximum power delivered to the load, the maximum power absorbed, the maximum current in the primary and capacitance $C_3$ against the nominal values for different misalignment values X between 25% and 50% in SPS compensation.

Figure 7 illustrates an electrical circuit representing the real system of high-frequency inductive coupling power transfer using SPP compensation with an H-bridge.

Figure 8 illustrates the change in the power absorbed and delivered to the load with respect to the nominal for misalignment X between the coils as a % of the width of the secondary for the SPP compensation configuration.

Figure 9 illustrates the change in the power absorbed from the supply, the power delivered to the load and the current in the primary with respect to the nominal values for X misalignment between the coils as a % of the width of the secondary for different values of the capacitors of the primary with SPP compensation.

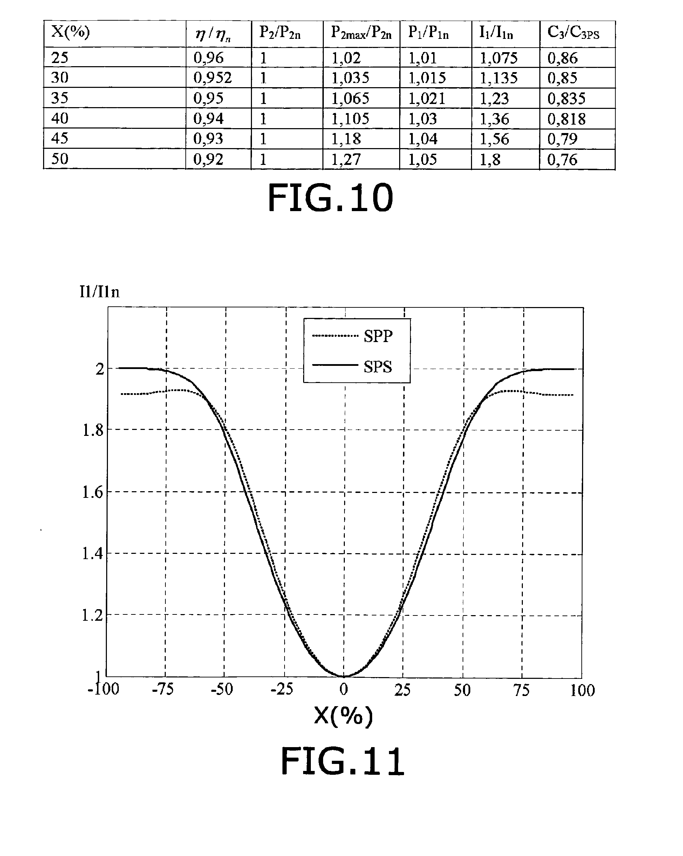

Figure 10 shows a table that lists the performance values, the maximum power delivered to the load, the maximum power absorbed, the maximum current in the primary and the capacitance $C_3$ against the nominal values for different misalignment values X between 25 and 50% for SPP compensation.

Figure 11 shows a comparison of the current absorbed with SPS compensation versus with SPP compensation.

## PREFERRED EMBODIMENT OF THE INVENTION

In the first example of the preferred embodiment, the high-frequency inductive coupling power transfer system has SPS compensation that allows transferring, naturally and without any type of control, the nominal power for misalignments of up to 50% of the area of the secondary coil.

Figure 2 shows a diagram of the high-frequency inductive coupling power transfer system with SPS compensation.

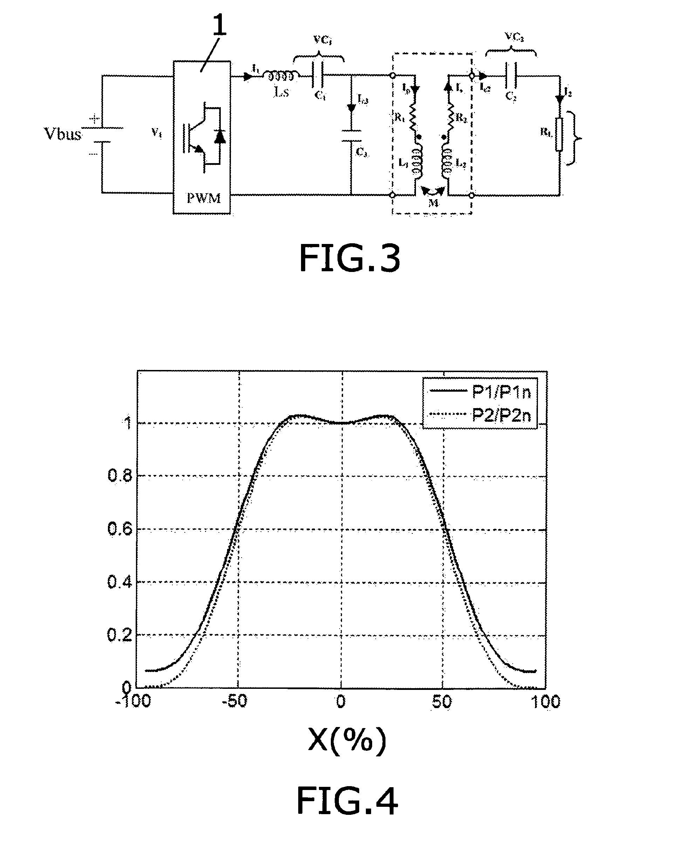

The ICPT system is fed via an H-bridge (1) with PWM control and frequency control, which makes it necessary to add a coil in series $L_s$, as shown in Figure 3, to protect the power supply system during the voltage transitions against a short circuit occurring across capacitors $C_1$ and $C_3$.

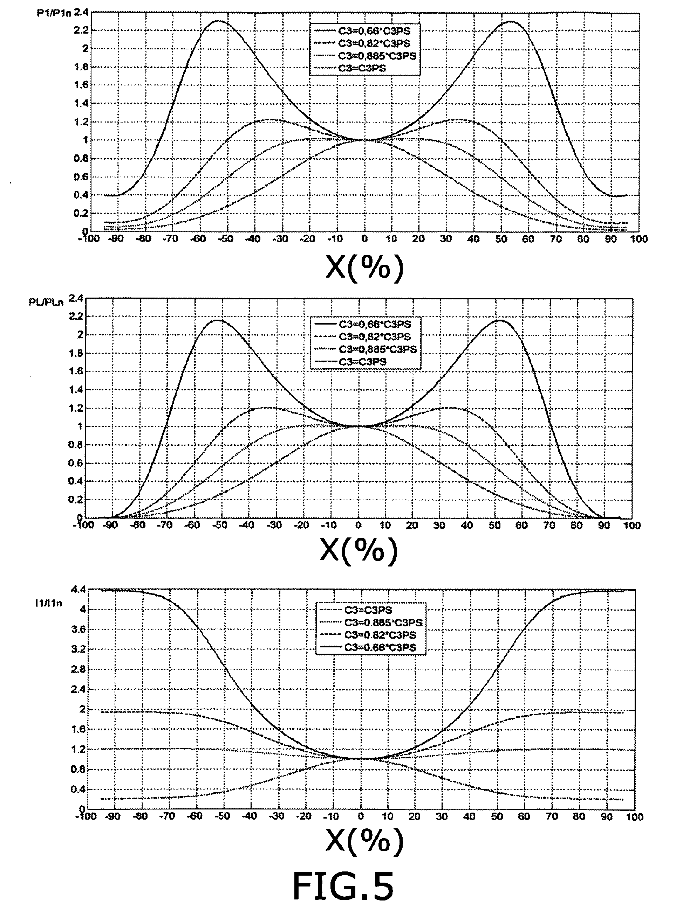

Figure 5 illustrates the change in the power delivered to the load with respect to the nominal power for misalignment X between the coils for different values of the capacitors of the primary.

It can also be seen in Figure 5 that for supplying nominal power for misalignments of up to 25%, the supply must be sized to supply 1% more power than the nominal.

In this case, a capacitor capacitance $C_3$ equal to 88.5% of its nominal value $C_{3PS}$ is selected and the capacitor in series $C_1$ is added to obtain the total resonance of the circuit as seen from the network.

For a desired misalignment of 50%, $C_3$ must be reduced to 82% of its nominal value $C_{3PS}$, although for this, a supply that can provide 75% more current than the nominal must be used.

Therefore, the first step is to choose the misalignment desired to be able to then select capacitances $C_1$ and $C_3$ with which the total resonance of the circuit as seen from the network is obtained, and, lastly, the power supply to be used and the maximum power of the load.

In the second example of the preferred embodiment, the high-frequency inductive coupling power transfer system has SPP compensation that allows transferring, again, naturally and without any type of control, the nominal power for misalignments of up to 50% of the area of the secondary coil.

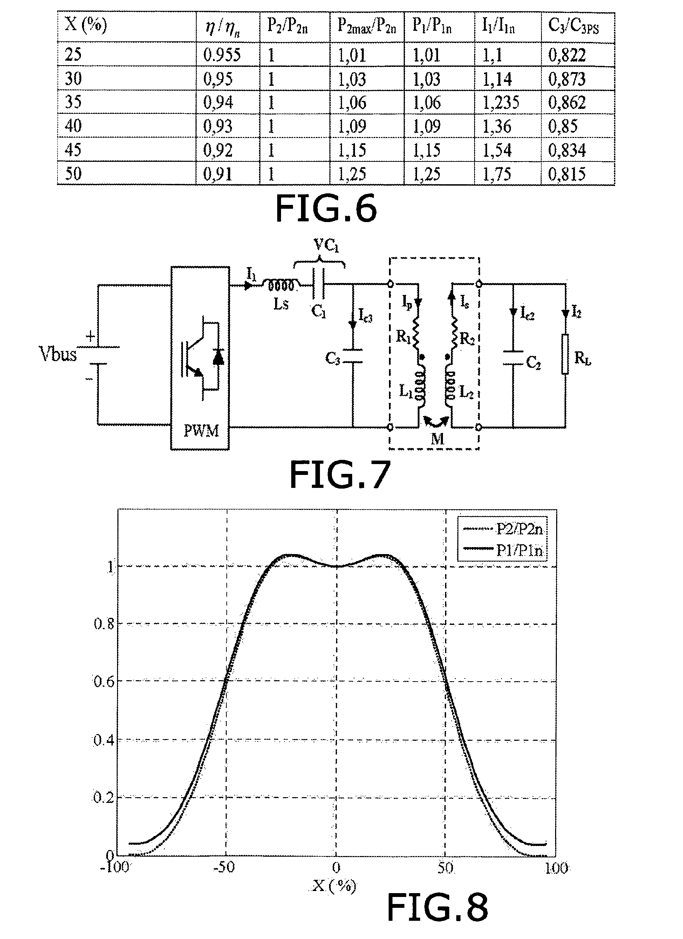

The elements of the ICPT system with SPP compensation is shown in Figure 7. The elements that comprise it are the same as in the first example with the exception of the secondary capacitor, which, in this example, is in parallel instead of in series as with the SPS configuration.

Figure 8 illustrates the change in the power delivered to the load with respect to the nominal power for misalignment X between the coils for different values of the capacitors of the primary.

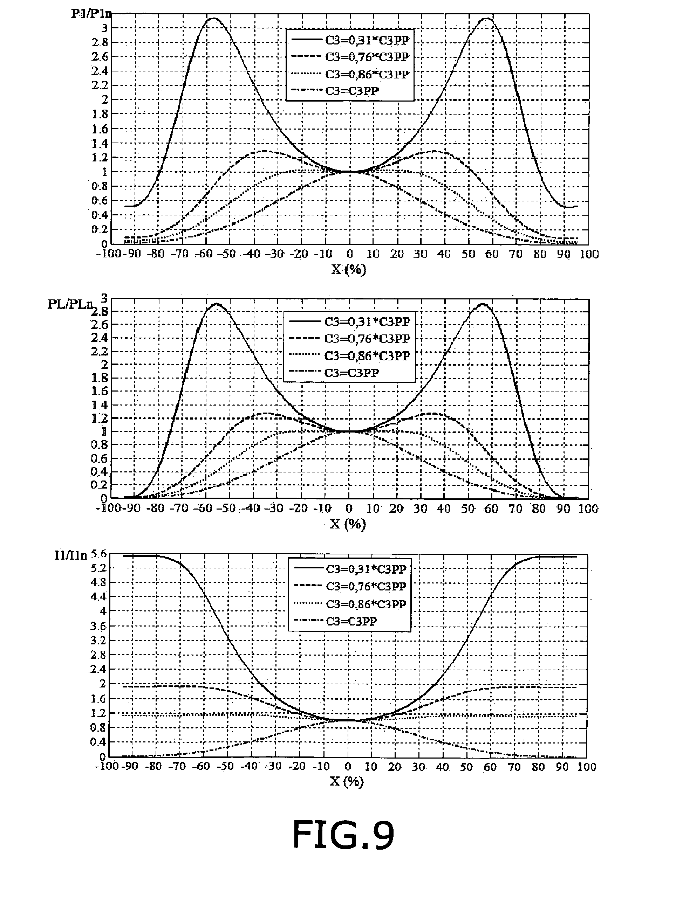

Figure 9 illustrates the change in the power delivered to the load with respect to the nominal power for misalignment X between the coils for different values of the capacitors of the primary.

It can also be seen in Figure 9 that for supplying nominal power for misalignments of up to 25%, the supply must be sized to supply 1% more power than the nominal.

In this case, a capacitor capacitance $C_3$ equal to 86% of its nominal value $C_{3PP}$ is selected and the capacitor in series $C_1$ is added to obtain the total resonance of the circuit as seen from the network.

For a misalignment of 50%, $C_3$ must be reduced to 76% of its nominal value $C_{3PP}$, although for this, a supply that can provide 80% more current than the nominal must be used.

Therefore, the first step is to choose the misalignment desired to be able to then select capacitances $C_1$ and $C_3$ with which the total resonance of the circuit as seen from the network is obtained, and, lastly, the power supply to be used and the maximum power of the load.

Greater maximum misalignments can be achieved, although the values for the maximum power and current to be supported by the system become much greater. Thus, for misalignments greater than 70% of the area of the secondary coil, the power supply must be oversized to the extent that the maximum current of the supply is more than four times the nominal current as shown in Figure 5.

The essence of this invention is not affected by changing the materials, form, size or placement of the component elements, which are not described restrictively, this basic essence being enough for an expert to reproduce the invention.

## Claims

1. A high-frequency inductive coupling power transfer system wherein it has SP compensation in the primary and is applicable for both secondaries compensated in series and in parallel; i.e., with a capacitor $C_1$ in series followed by a capacitor $C_3$ in parallel in the primary, and a capacitor $C_2$ in series or parallel in the secondary with which a power equal to or greater than the nominal can be transferred for misalignments of up to 50% of the area of the secondary coil when the maximum power delivered to the load does not exceed 25% of the nominal power and the maximum overcurrent of the supply does not exceed 75% owing to the fact that the capacitance of the capacitor $C_3$ is below that which would put the group comprising $C_2$, $C_3$ and the coupled coils in resonance.

2. A high-frequency inductive coupling power transfer system as claimed in Claim 1 wherein it is fed via an H-bridge (1) with PWM control and frequency control, and a coil in series $L_s$.

3. A high-frequency inductive coupling power transfer system as claimed in Claim 1 or 2 wherein for SPS compensation, i.e., with capacitor $C_2$ in series, for supplying the nominal power for misalignments of up to 25%, the supply must be sized to supply 1% more power than the nominal, which means selecting a capacitance for capacitor $C_3$ equal to 88.5% of its nominal value $C_{3PS}$.

4. A high-frequency inductive coupling power transfer system as claimed in Claim 1 or 2 wherein for SPS compensation, i.e., with capacitor $C_2$ in series, for supplying the nominal power for up to misalignments of 50%, the supply must be sized to supply 75% more current than the nominal, which means selecting a capacitance for capacitor $C_3$ equal to 82% of its nominal value $C_{3PS}$.

5. A high-frequency inductive coupling power transfer system as claimed in Claim 1 or 2 wherein for SPP compensation, i.e., with capacitor $C_2$ in parallel, for supplying the nominal power for misalignments of up to 25%, the supply must be sized to supply 1% more power than the nominal, which means selecting a capacitance for capacitor $C_3$ equal to 86% of its nominal value $C_{3PP}$.

6. A high-frequency inductive coupling power transfer system as claimed in Claim 1 or 2 wherein for SPP compensation, i.e., with capacitor $C_2$ in parallel, for supplying the nominal power load for misalignments of up to 50%, the supply must be sized to supply 80% more current than the nominal, which means selecting a capacitance for capacitor $C_3$ equal to 76% of its nominal value $C_{3PP}$.

7. An inductive coupling power transfer procedure with SP configuration in the primary wherein the main stage consists in choosing the capacitances of capacitors $C_1$ and $C_3$ of the primary for transferring the nominal power having previously chosen a misalignment, where:

> • firstly, the capacitances $C_2$ and $C_3$ are determined using PS, parallel-series, compensation equations or PP, parallel-parallel, compensation equations, depending on how capacitor $C_2$ of the secondary is placed, in series or in parallel, and which are the nominal capacitances $C_{2PS}$ and $C_{3PS}$, and $C_{2PP}$ and $C_{3PP}$ respectively; and then,
> • a capacitance $C_3$ that is less than its nominal value $C_{3PS}$ or $C_{3PP}$ is selected, which means the total impedance of the system is inductive and, therefore, that capacitor $C_1$ can be added in the primary in series.
> and the second stage, once capacitances $C_1$ and $C_3$ have been determined, consists in checking if, for a misalignment value between 0 and the maximum desired misalignment, the power delivered to the load is below the nominal values, in which case, $C_3$ is reduced again and $C_1$ is recalculated until the power supplied to the load is equal to or greater than the nominal for the entire misalignment range in which the configuration is to work.

where, in the event that the maximum power provided by the supply were to reach the maximum for a maximum misalignment value lower than the desired value, the nominal power for the maximum misalignment chosen would not be reached but rather a lower one; thus, by increasing the capacitance of the supply and/or the power of the load, capacitances $C_1$ and $C_3$ would be recalculated and the new misalignment obtained.

8. A procedure related to the power transfer system with SP configuration in the primary as claimed in Claim 7 wherein if the maximum power supplied to the load and/or the maximum current delivered by the supply are above those permitted for the entire range of misalignments in which the configuration is to work, the maximum permitted misalignment must be reduced so that both parameters fall within those allowed by the load and supply respectively.

# FIG.1

# FIG.2

FIG.3

FIG.4

FIG.5

9

| X (%) | $\eta/\eta_n$ | $P_2/P_{2n}$ | $P_{2max}/P_{2n}$ | $P_1/P_{1n}$ | $I_1/I_{1n}$ | $C_3/C_{3PS}$ |
|---|---|---|---|---|---|---|
| 25 | 0.955 | 1 | 1,01 | 1,01 | 1,1 | 0,822 |
| 30 | 0,95 | 1 | 1,03 | 1,03 | 1,14 | 0,873 |
| 35 | 0,94 | 1 | 1,06 | 1,06 | 1,235 | 0,862 |
| 40 | 0,93 | 1 | 1,09 | 1,09 | 1,36 | 0,85 |
| 45 | 0,92 | 1 | 1,15 | 1,15 | 1,54 | 0,834 |
| 50 | 0,91 | 1 | 1,25 | 1,25 | 1,75 | 0,815 |

# FIG.6

# FIG.7

# FIG.8

FIG.9

| X(%) | $\eta/\eta_n$ | $P_2/P_{2n}$ | $P_{2max}/P_{2n}$ | $P_1/P_{1n}$ | $I_1/I_{1n}$ | $C_3/C_{3PS}$ |
|------|------|------|------|------|------|------|
| 25 | 0,96 | 1 | 1,02 | 1,01 | 1,075 | 0,86 |
| 30 | 0,952 | 1 | 1,035 | 1,015 | 1,135 | 0,85 |
| 35 | 0,95 | 1 | 1,065 | 1,021 | 1,23 | 0,835 |
| 40 | 0,94 | 1 | 1,105 | 1,03 | 1,36 | 0,818 |
| 45 | 0,93 | 1 | 1,18 | 1,04 | 1,56 | 0,79 |
| 50 | 0,92 | 1 | 1,27 | 1,05 | 1,8 | 0,76 |

# FIG.10

FIG.11